Europäisches Patentamt

European Patent Office

Office européen des brevets

(19)

(11) **EP 0 471 473 B1**

(12) **EUROPEAN PATENT SPECIFICATION**

(45) Date of publication and mention
of the grant of the patent:
**08.03.2000 Bulletin 2000/10**

(51) Int. Cl.$^7$: **G06K 9/56**

(21) Application number: **91307006.6**

(22) Date of filing: **31.07.1991**

(54) **Image recognition apparatus and method**

Bilderkennungsgerät und -methode

Appareil et méthode de reconnaissance d'image

(84) Designated Contracting States:
**DE FR GB**

(30) Priority: **03.08.1990 JP 20661990**

(43) Date of publication of application:
**19.02.1992 Bulletin 1992/08**

(73) Proprietor:
**CANON KABUSHIKI KAISHA
Tokyo (JP)**

(72) Inventor: **Tanaka, Tetsuomi
Ohta-ku, Tokyo (JP)**

(74) Representative:
**Beresford, Keith Denis Lewis et al
BERESFORD & Co.
High Holborn
2-5 Warwick Court
London WC1R 5DJ (GB)**

(56) References cited:
- **OPTICAL ENGINEERING vol. 28, no. 7, July 1989, BELLINGHAM, WA pages 793 - 9 B. JENG 'Optical chinese character recognition using accumulated stroke features' section 2.**
- **PROC. OF THE 1987 IEEE INT. CONF. ON SYSTTEMS, MAN, AND CYBERNETICS vol. 2, 20 October 1987, ALEXANDRIA, VA pages 759 - 63 O. IWAKI ET AL 'a segmentation method based on office document hierarchical structure' section 5.2**
- **INT CONF ON ACOUSTICS, SPEECH AND SIGNAL PROCESSING vol. 2, 11 April 1988, NYC, NEW YORK pages 1056 - 9 .F. CATTHOOR AND AL. 'An ASIC architecture for contour line filtering'**
- **PROC. INT. CENTER FOR THEORITICAL PHYSICS 1983, pages 169 - 74 H. HAGITA, I. MASUDA ET AL. 'Handprinted Kanji character recognition based on pattern matching method' section 2.**
- **PROC. CVPR '85 1985, pages 550 - 7 I. MASUDA, N. HAGITA ET AL 'Approach to Smart Document Reader System' section 4.1**

## Description

BACKGROUND OF THE INVENTION

Field of the Invention

The present invention relates to a character recognition apparatus for high-speed processing of entering a text image and converting character image into character codes.

Related Background Art

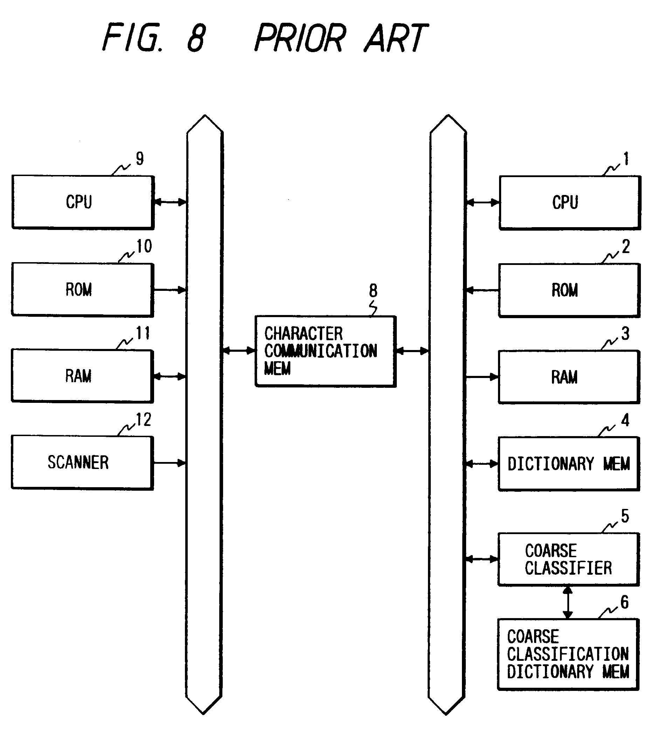

At first reference is made to Fig. 8 showing a prior technology, wherein shown are a CPU 1; a ROM 2 storing a program for the CPU 1; a RAM for storing data of the CPU 1; a dictionary memory 3 for fine recognition; a coarse classification unit 5; a coarse classification memory 6; a character/communication memory 8; a character extraction CPU 9; a ROM 10 storing a program for the process executed by the CPU 9; a data RAM 11 for the CPU 9; and a scanner 12 for text image entry.

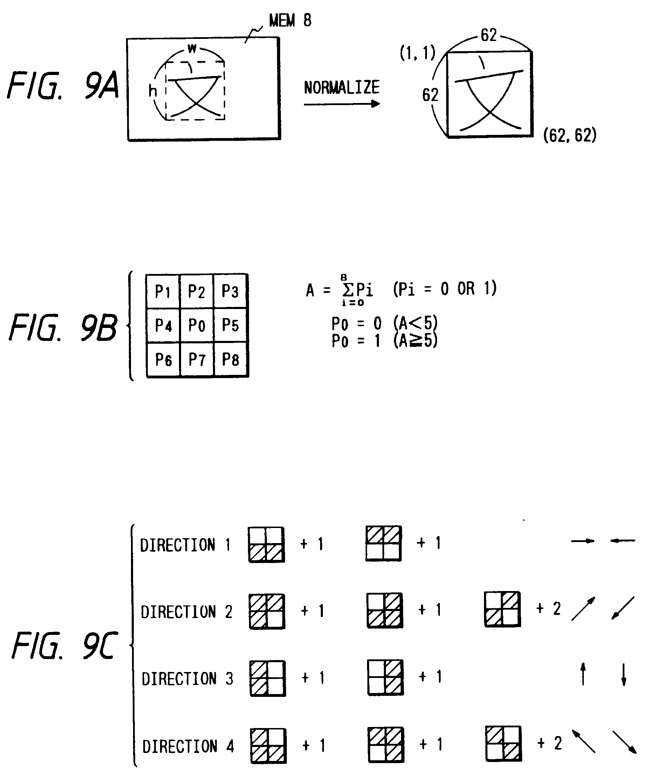

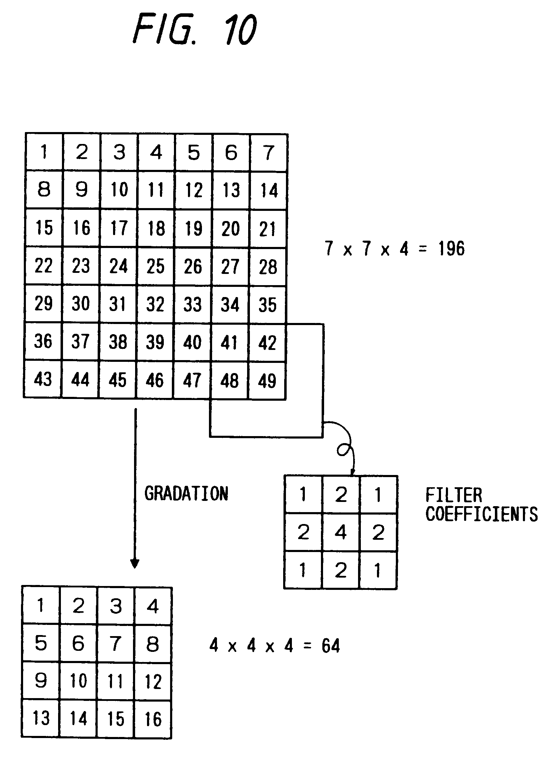

At first a text image is entered by the scanner into the RAM 11. The CPU 9 effects a character extraction process on the text image stored in the RAM 11, stores the extracted character in the character communication memory 8, and asks the CPU 1 to effect the recognition process. The CPU 1 normalizes the character image, in the character communication memory 8, to a size N x N (N = 62) as shown in Fig. 9A. Then conducted is a smoothing process, by applying a filtering process on each of 62 x 62 pixels and 8 surrounding pixels, thereby determining the value of each pixel and removing the distortion at the normalization (Fig. 9B). Then an image of 64 x 64 pixels, including a white pixel added to each side, is divided into 7 x 7 blocks, and a histogram is formed on the number of direction patterns 1 - 4 shown in Fig. 9C, in each block. There may be made two counts, in certain cases, on the direction 2 or 4. There is thus determined a vector of 196 dimensions in total, which is reduced to a vector of 4 x 4 x 4 = 64 dimensions by filtering as shown in Fig. 10. Said vector of 64 dimensions constitutes a feature vector. The above-explained process from the normalization of character image to the determination of 64-dimensional vector constitutes the feature extraction.

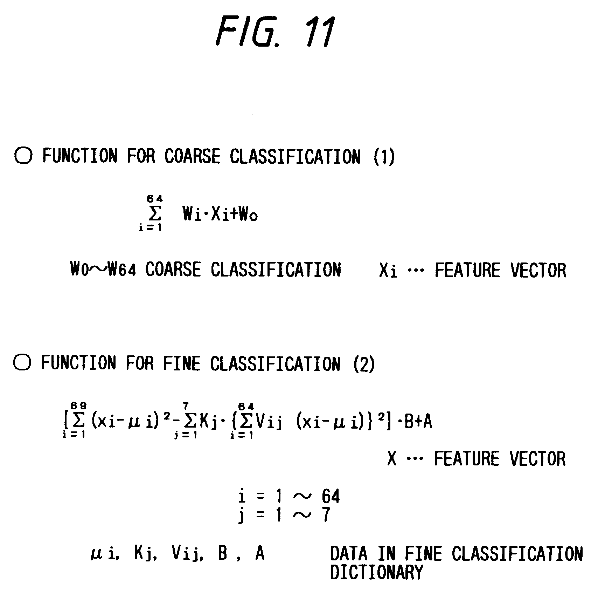

Then the coarse classification unit 5 effects coarse classification by matching the above-mentioned feature vector with all the characters in the dictionary memory 6 according to an equation (1) in Fig. 11, thereby reducing the number of candidate characters to about 1/10.

Finally the CPU 1 effects distance calculation according to an equation (2) on the candidate characters obtained in the coarse classification unit, and returns the several characters highest in the ranking, as the result of recognition, to the CPU 9 through the character communication memory 8.

As explained in the foregoing, the feature extraction from the normalization of the character image to the extraction of direction indexes has been all conducted by the CPU 1.

However, such conventional technology is heavily time consuming and undesirably affects the entire recognition time, since the extraction of feature (direction indexes) of the character image is entirely conducted by the CPU.

Also a CPU, if provided exclusively for feature extraction, generally leads to a cost increase which is more significant than the achievable reduction in processing time.

Optical Engineering, Vol 28, No. 7, July 1989, Bellingham, WA, USA, pages 793-799 in an article by B Jeng "Optical Chinese Character Recognition Using Accumulated Stroke Features" discloses an optical character recognition system in which a feature extractor is used to extract features using a direction index extraction technique. A central processing unit controls the procedure using pipeline processing.

Proceedings of the 1987 IEEE International Conference on Systems, Man, and Cybernetics, Vol 2, 20 October 1987, in an article by O Iwaki et al entitled "A Segmentation Method Based On Office Document Hierarchical Structure", discloses an optical character recognition system in which the recognition speed is increased using parallel processing.

International Conference on Acoustics, Speech, and Signal Processing, Vol 2, published 11 April 1988, New York City, USA, pages 1056-1059, in an article by F Catthoor et al "An ASIC Architecture for Contour Line Filtering", discloses a real time finger print recognition system including an applications specific architecture including six specially designed data path modules for contour line filtering.

Proceedings of the International Center for Theoretical Physics 1983, pages 169-174, in an article by N Hagita et al "Handprinted Kanji Characters Recognition Based On Pattern Matching Method", discloses a character recognition method in which direction vectors are calculated.

Proceedings of CVPR 1985, pages 550-557 in an article by I Masuda et al entitled "Approach to Smart Document Reader System" discloses a character recognition system in which the direction contributivities are calculated.

SUMMARY OF THE INVENTION

According to a first aspect of the present invention, there is provided an image processing apparatus comprising processing means; image memory means for storing character image data; extraction means for extracting direction information from the character image data stored in the memory means; and matching means for executing a matching process under the control of said processing means between the extracted direction information and reference data stored in a dictionary, the apparatus being characterized in that said processing means is arranged to designate an address in the image memory means of a character, and in that said extraction means is arranged to execute a direction information extracting process, without being controlled by said processing means, in response to designation of the address by said processing means, said extraction means comprising latching means for holding data from the image memory means at the designated address and producing an output representative of a direction index for the held data; counter means for counting each direction index output by the latching means to produce said direction information; and a RAM for storing said direction information, wherein said matching means is arranged to execute the matching process between the extracted direction information and the reference data stored in the dictionary in response to said direction information produced by the extraction means.

According to a second aspect of the present invention, there is provided an image processing method including the steps of storing character image data in an image memory means; extracting direction information from the character image data stored in the image memory means; and executing a matching process under the control of a processing means between the extracted direction information and stored reference data, the method being characterized by the steps of using the processing means to designate an address in the image memory means of a character; holding data from the image memory means at the designated address in a latching means effective to produce an output representative of a direction index for the held data; counting the successive output in direction indices to provide said direction information; and storing said direction information, the direction information extracting process being executed without being controlled by said processing means, in response to said designated address; and the matching process between the extracted direction information and stored reference data being executed in response to the direction information produced by the extraction means.

The present invention therefore provides the following advantages:

(1) The processing time is significantly reduced since the feature extraction can be conducted by a hardware and in parallel manner according to control signals from the CPU;
(2) The use of a hardware instead of a CPU achieves a cost reduction; and
(3) As the load of the CPU is significantly reduced, it can be used for other processes such as fine classification after the feature extraction, whereby the recognition rate can be improved.

BRIEF DESCRIPTION OF THE DRAWINGS

Figs. 1A and 1B are block diagram of an embodiment 1 of the present invention;
Figs. 2A to 2D are views explaining a character/communication memory;
Fig. 3 is a view showing an example of memory map in a CPU 1;
Figs. 4A and 4B are views showing the structure of a shift register unit;
Fig. 5 is a block diagram of a control signal generator unit;
Fig. 6 is a view explaining an X-Y table;
Figs. 7A and 7B are views showing the direction of normalization;
Fig. 8 is a block diagram of a conventional structure;
Figs. 9A to 9C and 10 are views showing an algorithm for feature extraction;
Fig. 11 is a view showing recognition functions;
Fig. 12 is a block diagram of a 2nd embodiment;
Fig. 13 is a block diagram of a 4th embodiment;
Fig. 14 is a block diagram of a direction index decoding unit;
Fig. 15 is a block diagram of a 6th embodiment;
Fig. 16 is a block diagram of a 7th embodiment;
Fig. 17 is a block diagram of an 8th embodiment;
Fig. 18 is a timing chart of the 1st embodiment; and
Fig. 19 is a view of a block.

DESCRIPTION OF THE PREFERRED EMBODIMENTS

[Embodiment 1]

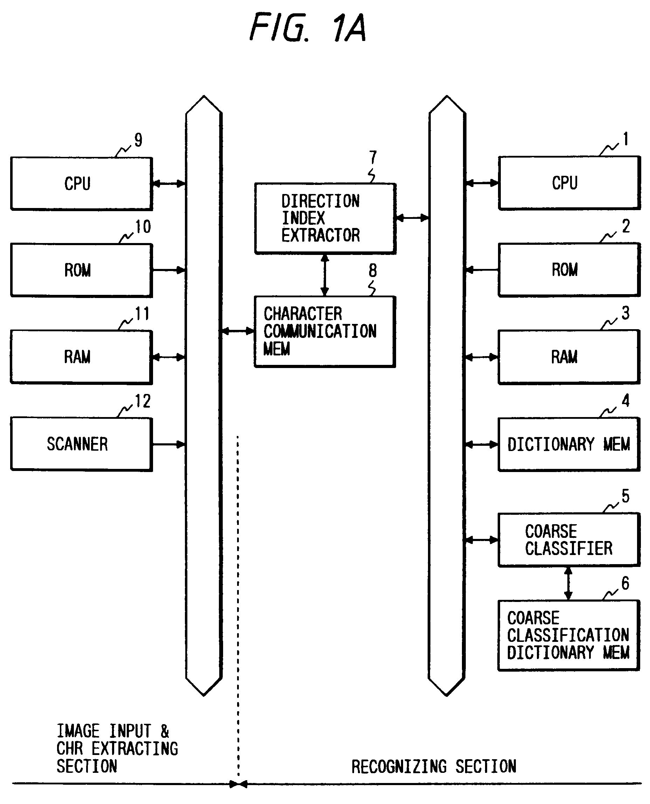

Fig. 1A is a block diagram best representing the feature of the present invention. At the left-hand side of a dotted line, there is represented an image input/character extraction section for entering a text image from a scanner and effecting character extraction. At the right-hand side of the dotted line, a character recognition section for describing the feature of each extracted character image by a feature vector, matching the feature vector with the dictionary memory and releasing a character of shortest distance as the candidate character. In these sections there are provided a CPU 1 for controlling the entire recognition unit; a ROM 2 storing programs for the CPU 1; a RAM 3 for storing the data of the CPU 1 and the feature vector; a detailed dictionary memory 4 for storing data for matching with the feature vector, for detailed distance calculation by the CPU 1 based on the candidate characters obtained from a coarse classification unit 5 to be explained later; a coarse classification unit 5 for effecting simple distance calculations between the feature vector and all the characters thereby selecting candidate characters;

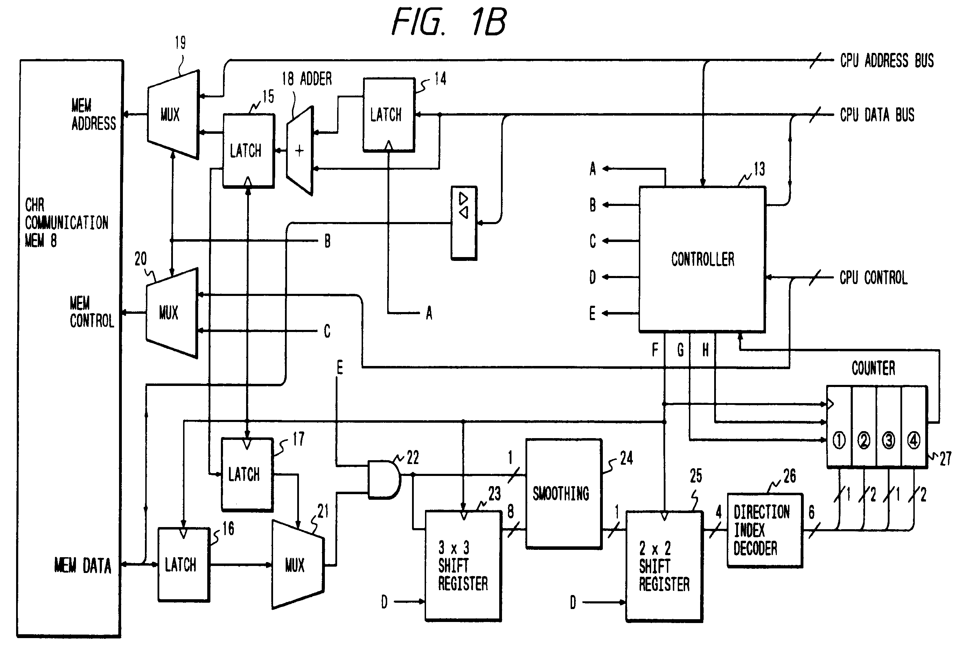

a coarse classification dictionary memory 6 storing the matching data for the coarse classification unit 5; a direction index extraction unit 7 of which structure is shown in Fig. 1B; a character communication memory 8 for storing a character image extracted by the character extraction section and conducting communication between the character extraction section and the recognition section; a CPU 9 for controlling the entire image input/character extraction section; a ROM 10 storing programs for the CPU 9; a data RAM 11 for storing text image for character extraction by the CPU 9; and a scanner 12 for text image input. Fig. 1B is a block diagram of the direction index extraction unit 7 shown in Fig. 1A, wherein provided are a control unit 13 for internal control of said direction index extraction unit 7; latches 14 - 17; an adder 18; multiplexers 19 - 21; a white pixel masking unit 22; a 3 x 3 shift register 23; a smoothing unit 24; a 2 x 2 shift register 25; a direction index decoder unit 26; and a direction index counter 27.

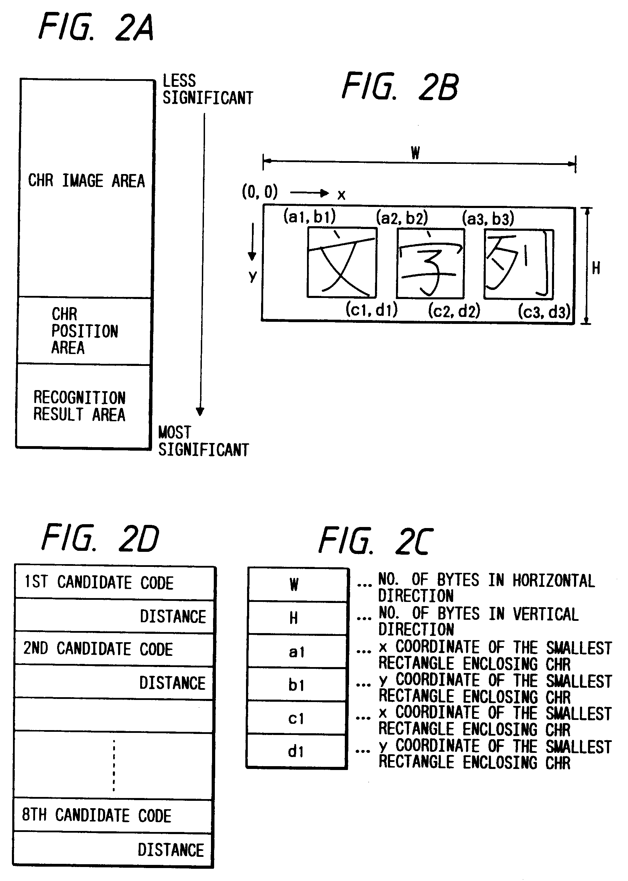

The entire process flow is as follows. At first the scanner stores the text image to be processed in the RAM 11, and the CPU 9 executes character extraction on thus stored text image. Then the CPU 9 transfers the extracted image and the position of character to the character/communication memory 8 which has, as shown in Fig. 2A, a character image area, a character position area and a recognition result area in succession from the lowermost address. The character image area stores, as shown in Fig. 2B, a part of the text image subjected to character extraction. The character position area stores, as shown in Fig. 2C, size information (W, H) of a rectangular area stored in the character image area and x, y-coordinates (a1, b1, c1, d1) of two points indicating the position of circumscribed rectangle of a character in said rectangular area. The rectangular image stored in the character image area may contain any number of characters as long as the product W x H of the number W of bytes in the horizontal direction and the number H of dots in the vertical direction of the rectangular image does not exceed the size of the character image area. On the other hand, the unit of transfer from the RAM 11 to the character/communication memory 8 is determined by the size of the character image area. For example, if the character image area is very small, said transfer has to be made in the unit of a character. On the other hand, if said area is large, the transfer may be conducted in the unit of a line, a half page, or an entire page in extreme case. In case of transfer of plural characters, the 2nd character can be represented by replacing a1, b1, c1, d1 merely with a2, b2, c2, d2. In response to the character image designated by the CPU 9, the CPU 1 returns eight character codes positioned close in the dictionary patterns and distances from the standard patterns in said dictionary, as shown in Fig. 2D. When the character image and the character position are set in the character/communication memory 8 by the CPU 9, the CPU 1 executes a recognition process. The recognition process is principally composed of three steps. The first step for feature extraction, effects feature extraction on the designated character position of the given image, thereby extracting a feature vector. The second step of coarse classification matches the feature vector obtained in the feature extraction with the standard patterns of all the characters in the coarse classification dictionary memory 6, thereby selecting candidate characters of a number which is about 1/10 of the number of all the characters (for example 50 candidate characters from 3,000 characters). The third step for fine recognition compares the feature vector, obtained in the feature extraction, with the content of the detailed dictionary memory 4 corresponding to the candidate characters obtained in the coarse classification, thereby reducing the number of candidate characters to several characters (8 characters in the example shown in Fig. 2D). The obtained results are supplied to the recognition result area of the character/communication memory 8.

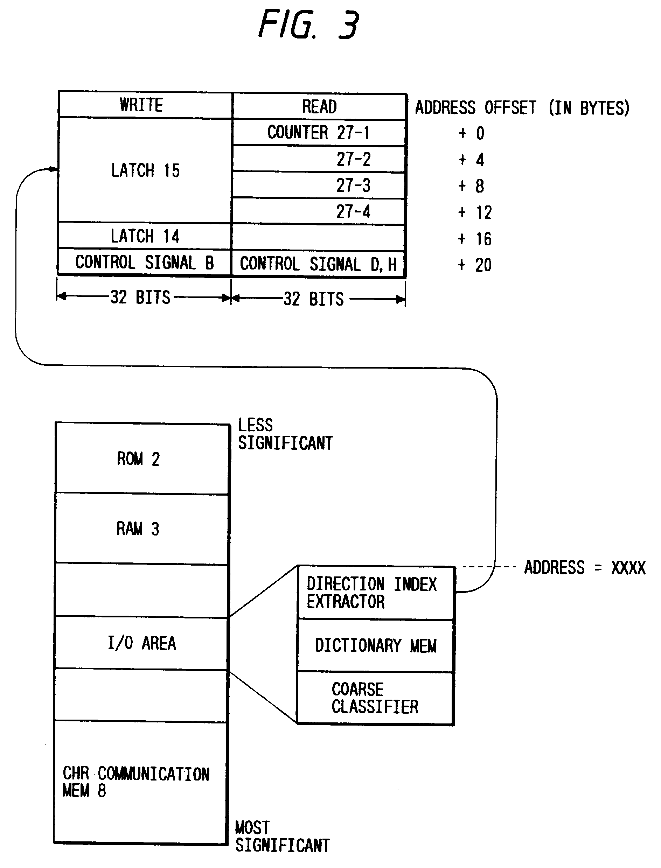

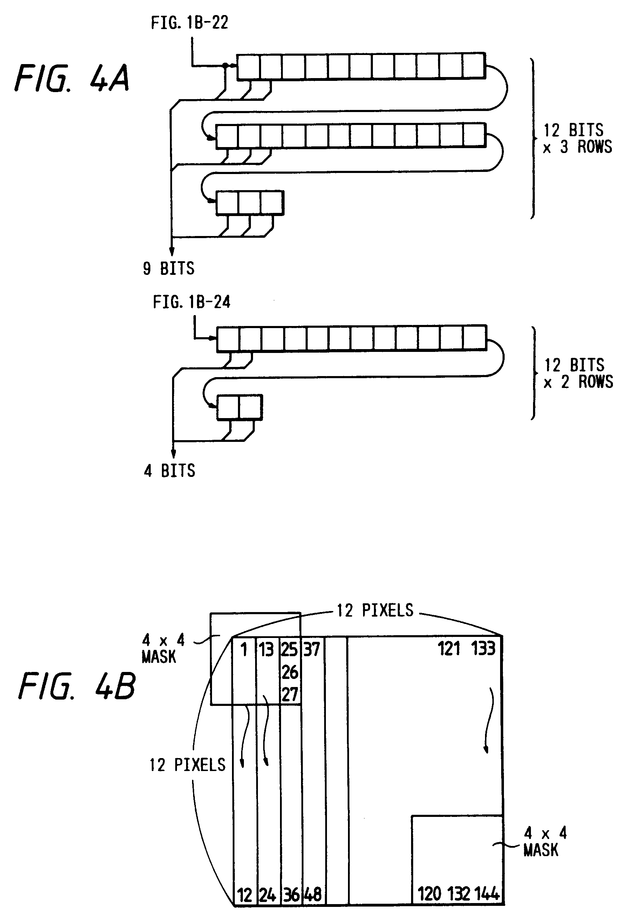

In the following there will be explained the actual process of feature extraction. It is assumed that the character/communication memory 8 has a capacity of 128 kbytes and a 16-bit bus, that the CPU 1 has a data bus width of 32 bits and that all the addresses are counted by the unit of byte. The multiplexers 19, 20 in Fig. 1B are 2-tol selectors for selecting outputs in response to a signal B from the control unit 13. Normally the multiplexer 19 is selected by an address bus from the CPU while the multiplexer 20 is selected by a read/write control signal to the character/communication memory 8 from the CPU, whereby the direct read/write operation from the CPU 1 is rendered possible. The multiplexer 19 has to have 16 bits, based on the structure of the memory 8. The CPU 1 regards the character/communication memory 8 as a device of a separate address mapping from that of the direction index extraction unit 7, which has, as an I/O device, an address map as shown in Fig. 3. A word of the CPU 1 is of 4 bytes (32 bits), and the latch 15 is mapped over 4 words. A latch signal F therefore is supplied not only to the latch 15 but also to the latches 16, 17, shift registers 23, 25 and counter 27. The latch 15 does not latch the data from the CPU 1 but the sum of output of the latch 14 and the data from the data bus of the CPU 1, through the adder 18. The output of said latch 15 indicates the position of 1-bit data of the character/communication memory 8. If W = 10 bytes in Fig. 2B, the bit address of the coordinate (1, 2) (1-bit position in the memory 8) is indicated by 10 x 8 + 2 = 82. For representing all the bit addresses of the character/communication memory 8 (128 kBytes), each of the latches 14, 15 has to have 20 bits. In the latch 15, the upper 16 bits are connected to the multiplexer 19, while the lower 4 bits are connected to the input ports of the latch 17. The latch 14 is also mapped as shown in Fig. 3, and latches the data from the data bus of the CPU 1, by a signal A from the control unit 13 in response to a writing operation of the CPU 1 in the corresponding address. Addresses of offset 20 bytes of the direction index extraction unit 7 are used for set/resetting of a signal B and are normally in the reset state. When set, the output of the multiplexer 19 releases the upper 16 bits of the latch 15, thereby addressing the character/communication memory 8. At the same time a signal C of the control unit is supplied as a control signal for the memory 8 from the multiplexer 20, and, in this state the access from the CPU 1 to the memory 8 is inhibited. In the data writing into the latch 15, the data are read from the character/communication memory 8 and are latched in the latch 16 at a same timing as the latch 15. Said latch 16 has a width of 16 bits, same as in the data bus of the memory 8. The data writing operation from the CPU 1 is conducted in the above-explained manner. In the data reading operation, the values of counters 1 - 4 of the counter unit 27 are read. Said counters 1 - 4 respectively correspond to the direction indexes 1 - 4. Pulse signals D, H are generated by a reading operation dummy reading) of the addresses of offset 20 bytes. The signal D is used for clearing the shift registers 23, 25, bus it masked when the signal B is set. The signal H is used for clearing the counters of the counter unit. As shown in Fig. 4A, the shift register 23 has a capacity of 12 bits x 3 rows, while the shift register 24 has a capacity of 12 bits x 2 rows. Said capacity of 12 bits is selected for the following reason. A normalization size of 62 x 62 pixels, with an additional pixel on each side provides a size of 64 x 64 pixels, which provides 63 x 63 direction index masks each composed of 2 x 2 pixels. Said 2 x 2 masks can be divided into 7 x 7 blocks each composed of 9 x 9 masks. Said 9 x 9 masks each composed of 2 x 2 pixels are constituted by 10 x 10 pixels, which require an additional pixel on each side for smoothing process. Thus direction indexes of a block can be obtained from 12 x 12 pixels. Therefore, by entering the data of 12 x 12 pixels into the shift register of 12 bits x 3 rows in the sequence shown in Fig. 4B and obtaining outputs of 9 bits as shown in Fig. 4A, there can be obtained 3 x 3 input values for smoothing for 10 x 10 pixels. Said 9-bit outputs are subjected to a smoothing process in the smoothing unit 24, of which outputs are similarly supplied to the shift register of 12 bits x 2 rows, and 4-bit outputs are obtained as shown in Fig. 4A. In this manner there are obtained masks for obtaining 9 x 9 direction indexes, each composed of 2 x 2 pixels. The direction index decoder unit converts said masks of 2 x 2 pixels into count control signals for the counters of four directions. However the contents of said 2x2-pixel masks may be different from the contents of the desired 9 x 9 pixels when the data are shifted in the shift register in the sequence shown in Fig. 4B, so that the direction indexes should not be counted in this state. White pixels are required around the pixels of the normalized image, and such white pixels have to be entered into the shift register 23 (Total 66 x 66 pixels are necessary for smoothing the image of 64 x 64 pixels).

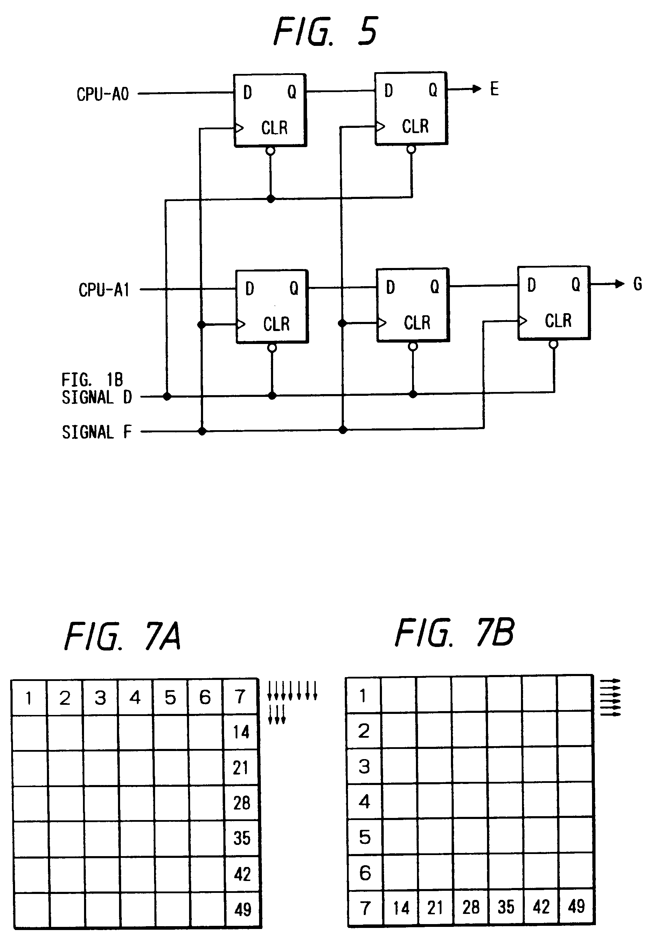

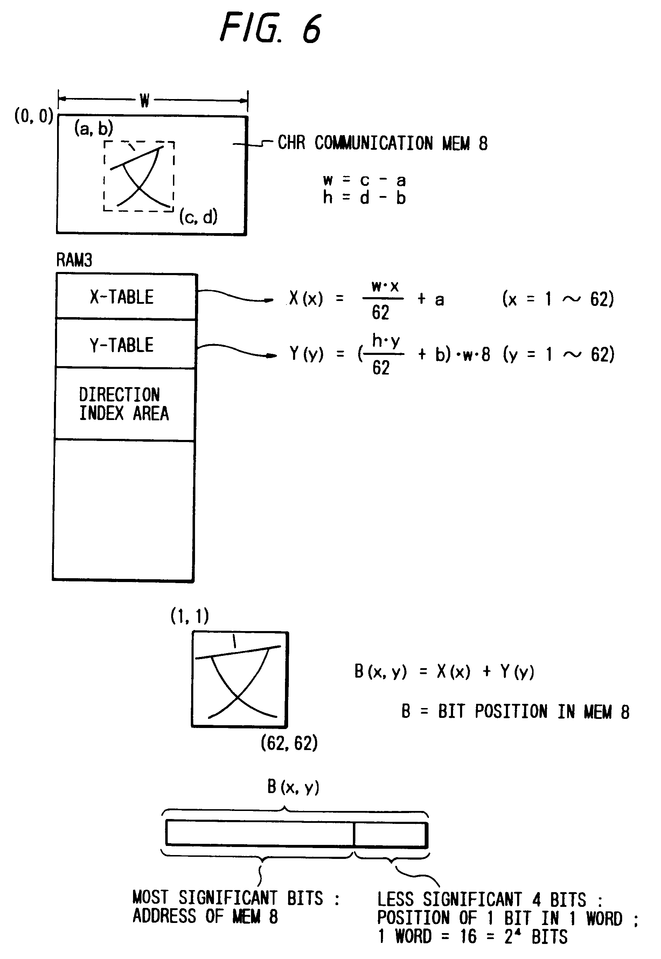

This control is conducted by signals E and G of the control unit 13. As shown in Fig. 3, the latch 15 covers 4 words. The data latching in the latch 15 is conducted regardless of the values of 2-bit address signals of the lower 2 bits CPU-A0, CPU-A1 of the address bus of the CPU 1. The output of the latch 15 indicates a bit in the memory 8 as explained before, and the property of said 1-bit data is indicated by said 2-bit address signals. More specifically, a signal CPU-S0 "0" indicates that the 1-bit data in the memory 8 is a white pixel for the outer frame, and a signal CPU-S1 "1" indicates that the 1-bit data is to be supplied to the shift register 23, then subjected to the smoothing and the direction index decoding and subjected to the counting of the direction index according to the decoded value. The signals E, G are generated by a circuit shown in Fig. 5, in which as in the shift register unit, the signal D clears the register and the signal F causes 1-bit shift. The signal E is delayed by two cycles from the signal F. More specifically, when the bit address for the pixel No. 1 shown in Fig. 4B, with description of a white pixel in the white frame (CPU-A0 = 0), is latched from the memory 8 into the latch 15, said description of the pixel No. 1 is released as the signal E during the latching cycle of the bit address of No. 3. In this state the latch 16 holds the data of one word of the memory 8, including the object 1-bit data No. 1, and the multiplexer 21 and the latch 17 selects the object bit for supply to the white frame masking unit 22. In this manner the property of the white frame is processed in this state. Also the property allowing or not allowing the direction index counting indicates whether a 4 x 4 is ready at the reading of the normalized pixel data (4 x 4 mask is obtained by combining 3 x 3 and 2 x 2 masks). In more detail, the counting is not possible for a pixel No. 27 in Fig. 4B because a 4 x 4 mask contemplated from said pixel overflows the frame of 12 x 12 pixels, while the counting is possible for a pixel No. 144 since a 4 x 4 mask contemplated from said pixel is included in the frame of 12 x 12 pixels. The counter unit 27 effects the counting operation, receiving the signal G representing said counting property and the output of the direction index decoding unit 26. In said counter unit 27, each of the counters 27-2 and 27-4 is capable of selecting a +1 count or a +2 count.

The latch 14 and the adder 18 function in the following manner. The CPU 1 receives the parameters of the character position from the character/communication memory 8 and prepares tables of X(x) and Y(y) as shown in Fig. 6. Thus the bit position in the character/communication memory 8, corresponding to the coordinate (x, y) of the normalized character image, is represented by X(x) + Y(y). Then the data X(1) is latched in the latch 14, and, when the latching of data Y(1) in the latch 15 is tried, the latch 15 stores the bit position of the character/communication memory 8 corresponding to the coordinate (1, 1) of the normalized character image. The subsequent latching operations of Y(2), Y(3), ... into the latch 15 without change in the latch 14 releases the bit positions corresponding to the coordinates (1, 2), (1, 3), ... from the latch 15. By data latching of Y-table into the latch 15 with the aforementioned property, the direction index extraction unit 7 effects the necessary process. Thus the CPU 1 only executes the preparation of the X- and Y-tables and the transfer of data thereof to the latch 14 and, with the aforementioned property, to the latch 15. After the data transfer of a block, the values of the counters 1 - 4 of the counter unit 27 are read and stored in the RAM 3, then said counters are cleared by the signal H, and there can be conducted the data transfer of a next block. Thus the process time for a pixel of a normalized image can be made approximately equal to the transfer time from the RAM 3 to the latch.

In the foregoing description, the pixel data are transferred in the vertical sequence as shown in Fig. 4B, because the 7 x 7 blocks are assumed to be numbered as shown in Fig. 7A. For the numbering arrangement as shown in Fig. 7A, it is natural to process the blocks in the order of 1, 2, 3, 4, 5, ... As already explained in the foregoing, 12 x 12 pixels are required for obtaining 9 x 9 direction indexes. Stated differently, there are required additional processings. However, when the pixel data are transferred in the vertical sequence, there are only required 12 x 9 pixels for the block 2 since it is continuation of the block 1. Consequently only the block 1 requires 12 x 12 pixels, while each of the blocks 2 - 7 requires 12 - x 9 pixels (As the shift register unit is cleared prior to the processing of the block 1, the white frame processing for the outer two pixels can be dispensed with, so that the processing can be limited to 10 x 9 pixels). Consequently there can be saved the transfer time for (12 x 12 - 12 x 9) x 6 x 7 = 1512 pixels. When the blocks are numbered as shown in Fig. 7B, the data are transferred in the horizontal sequence, by latching Y(1) in the latch 14, and transferring the data X(1), X(2), ... to the latch 15. The direction indexes can be read in the order of 1, 2, 3 and 4 by reading the values of the counters in a sequence of 3, 4, 1 and 2 in the counter unit 27. A high-speed extraction of direction indexes without the necessity of rearrangement thereof can be achieved by the selection of image scanning direction (pixel transfer direction) according to the desired output format (sequential order of 7 x 8 blocks). On the other hand, if the direction indexes are extracted from the blocks shown in Fig. 7B with the scanning direction shown in Fig. 7A, the process becomes complicated since it is necessary to rearrange the 196-dimensional vector according to the arrangement shown in Fig. 7B or to effect the data transfer from the counter unit 27 to the RAM 3 shown in Fig. 1 so as to match the block arrangement shown in Fig. 7B.

It is to be noted that the circuit shown in Fig. 1B has a 4-stage pipeline structure. More specifically, the data in the character/communication memory 8 can be processed in the counter unit 27 only after three other data are latched in the latch 15. Thus, in order to obtain 9 x 9 direction indexes, at first pixels 1 - 36 are transferred with counting inhibited. In each of subsequently lines, 3 pixels are transferred with counting inhibited, and 9 pixels are transferred with counting permitted. After the data transfer in this manner to the pixel 144, pixels 145, 146 and 147 of the next block are transferred with counting inhibited, then the values of the counters 1 - 4 of the counter unit 27 are read, and said counters are cleared. Subsequently 9 pixels starting from the pixel 148 are transferred with counting permitted. Thus, for the processing of each block of 12 x 12 pixels employing 4 x 4 masks, a 4-stage pipeline processing facilitates the control of the CPU 1, since the switching from the counting inhibited state to the counting permitted state can be made simultaneously with the data reading and clearing of the direction index counters. If the smoothing is to be conducted with 5 x 5 masks instead of 3 x 3 masks, there is preferably employed a 6-state pipeline structure as 6 x 6 masks are to be employed for each block of 14 x 14 pixels.

[Embodiment 2]

In the foregoing lst embodiment, the data transfer from the X, Y tables in the RAM 3 to the latches 14, 15 and the data transfer from the counter unit 27 to the RAM 3 are executed by the CPU 1, but there may be employed a DMA controller for these data transfers.

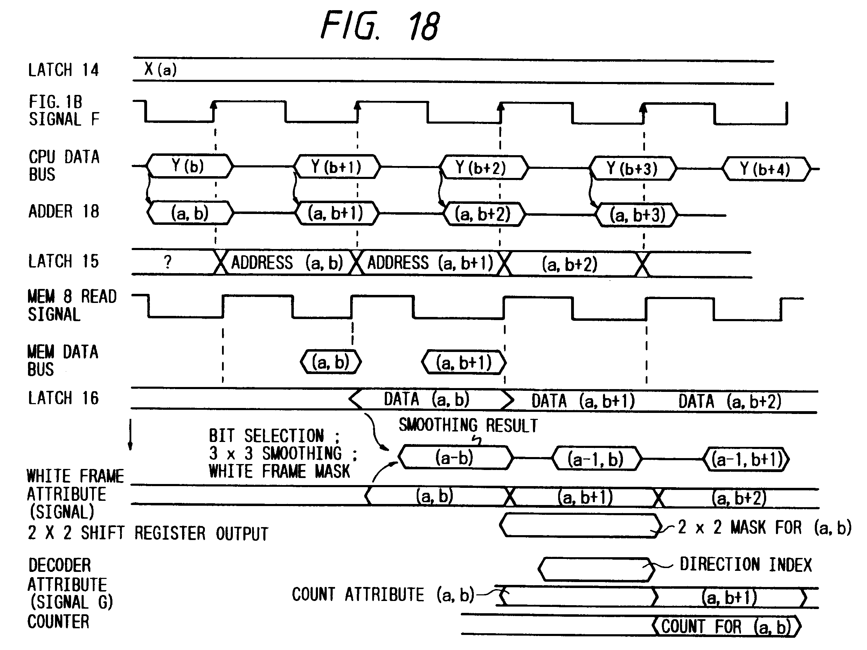

In the following there will be-explained the timing of the above-explained processes, with reference to a timing chart shown in Fig. 18.

It is assumed that the latch 14 holds the data X(a) of the arrangement of the X-table. Then, when the CPU 1 transfer the data Y(b) to the latch 15, the address of a pixel in the memory 8, corresponding to the normalized coordinate (a, b) is supplied to the adder 18 and to the latch 15. Then, at the next transfer of the data Y(b + 1), 1-word data in the memory 8 corresponding to the coordinate (a, b) are latched in the latch 16. Then, at the transfer of the data Y(b + 2), the pixel data of the coordinate (a, b) are selected by the output of the latch 17 and by the multiplexer 21 and masked by the signal E indicating the white frame property for the coordinate (a, b). Subsequently the smoothing unit 24 effects smoothing on 9 pixels in total, consisting of said masked output and data of 8 pixels already stored in the 3 x 3 shift register 23, and the result of smoothing for the pixel at (a - 1, b - 1) is entered into the 2 x 2 shift register unit 25 (shift input).

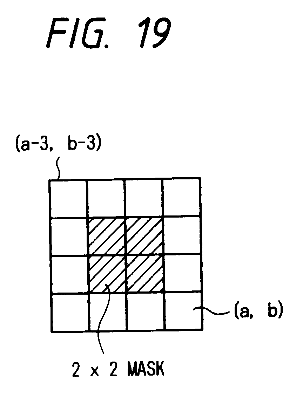

At the next transfer of the data Y(b + 3), a 2 x 2 mask is released from the shift register 25 for a 4 x 4 mask of the rectangular coordinates (a-3, b-3) - (a, b) as shown in Fig. 19, and is converted by the direction index decoding unit 26 into addition data of different directions. The count property signal G indicates the count inhibited or permitted state for a 2 x 2 mask with the coordinate (a, b) positioned at the lower end of 4 x 4 mask, and the counter unit 27 is controlled by the output of said decoding unit 26 and said signal G.

At the next transfer of the data Y(b + 4), in the counter unit 27, there are added the addition data for the direction index for a rectangle (a-2, b-2) - (a-1, b-1), in comparison with the preceding transfer cycle for the data Y(b + 3).

At the transfer of the data Y(b), the line CPU-A0 in Fig. 6 indicates a property that the coordinate (a, b) belongs to the white frame, while the line CPU-Al indicates a property whether the direction index counting is inhibited or permitted for the mask of rectangular coordinate (a-2, b-2) - (a-1, b-1).

[Embodiment 3]

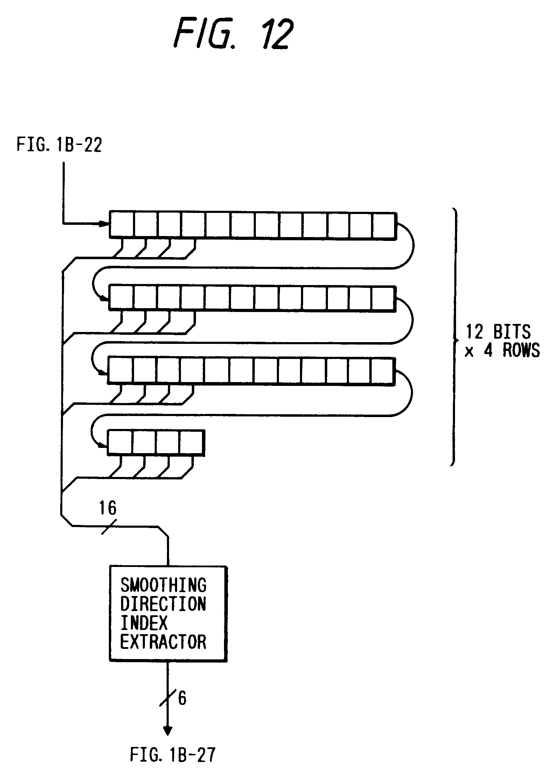

The 3 x 3 and 2 x 2 shift registers, the smoothing unit and the direction index extraction unit shown in Fig. 1B are replaced by a structure shown in Fig. 12, in which 4 x 4 masks are generated by a shift register of 12 bits x 4 rows, and 3 x 3 smoothing and extraction of 2 x 2 direction indexes are simultaneously conducted by a smoothing/direction index extracting unit, based on said 4 x 4 masks. The process executed by the CPU 1 is not at all affected by the structure shown in Fig. 12.

[Embodiment 4]

In the lst embodiment there were assumed a character normalization size of 62 x 62 pixels, a divided block number of 7 x 7, and a feature vector of 64 dimensions. However, these values are dependent on the character to be recognized. More specifically, for recognizing numerals "0" - "9" only, the size of normalization, number of divided blocks and dimension of feature vector can be smaller than the values mentioned above. On the other hand, these values have to be made larger for satisfactorily recognizing the handwritten Kanji (Chinese) characters.

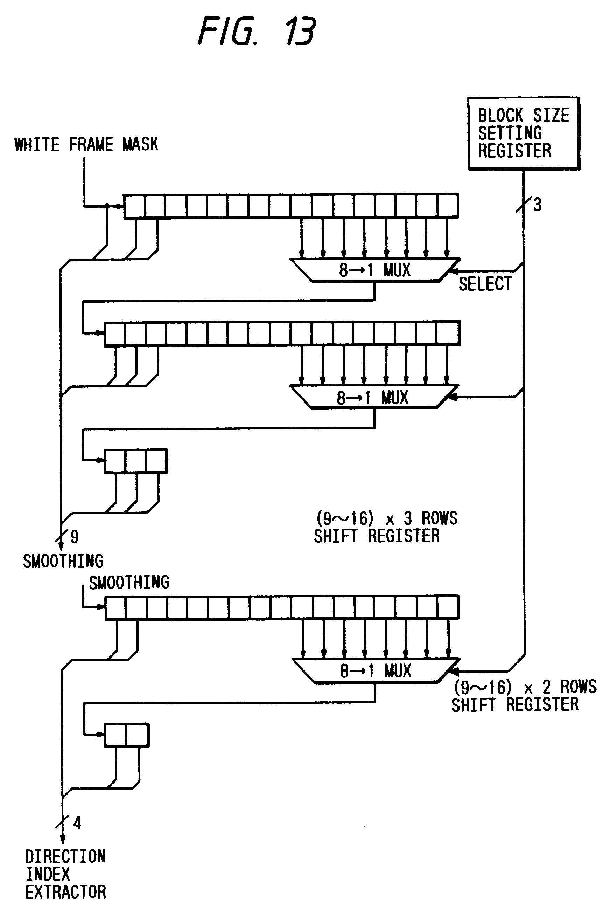

Thus a block size setting register and multiplexers are added, as shown in Fig. 13, to the 3 x 3 shift register and the 2 x 2 shift register in Fig. 1B. In contrast to the lst embodiment in which the block size is fixed at 12 x 12 pixels, the block size in this embodiment is rendered variable from 9 x 9 to 16 x 16 by setting values 0 - 7 in said block size setting register. The number of direction indexes (2 x 2 masks) for each block is represented by (block size - 3)$^2$. The normalization size N is represented by:

N = (block division number) x (block size - 3) - 1. In the lst embodiment, the block division number is 7 while the block size is 12, so that the normalization size is 62.

Thus, there can be selected normalization sizes obtained by the combinations of:

    block division number = 1, 2, 3, ...
    block size = 9 - 16

by preparing the X, Y-tables shown in Fig. 6 in the following manner:

$$X(x) = \omega \cdot x/N + a \ (x = 1 - N)$$

$$Y(y) = h \cdot k/N + b \cdot W + 8 \ (y = 1 - N).$$

Stated differently, the direction index extraction unit 7 is a hardware for processing in the unit of a block, and the sequence of processing of blocks is determined by the control of the CPU 1.

[Embodiment 5]

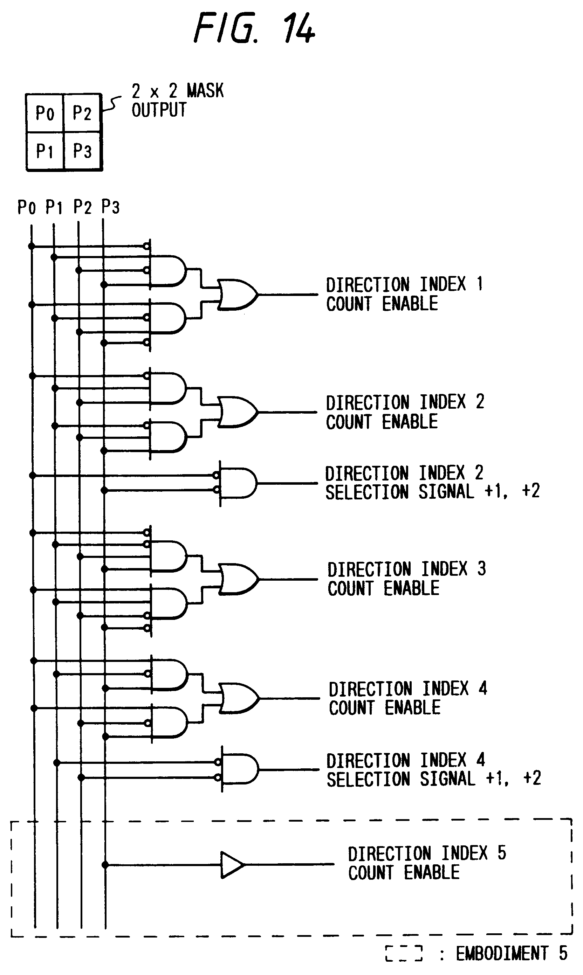

Fig. 14 shows the internal structure of the direction index decoding unit 26 shown in Fig. 1B. By adding a counter 5 in the counter unit and connecting said counter to a direction index 5 count enable signal, shown by a broken-lined frame in Fig. 14, the number of black pixels in each block is counted by said counter 5. The process of the CPU 1 is modified, in the data reading from the counter unit to the RAM 3, to the reading of index 5 instead of index 4, so that the processing time is hardly affected.

Such structure of the direction index decoding unit and the counter unit enables extraction not only of directional feature but also of other features such as black/white pixel density.

[Embodiment 6]

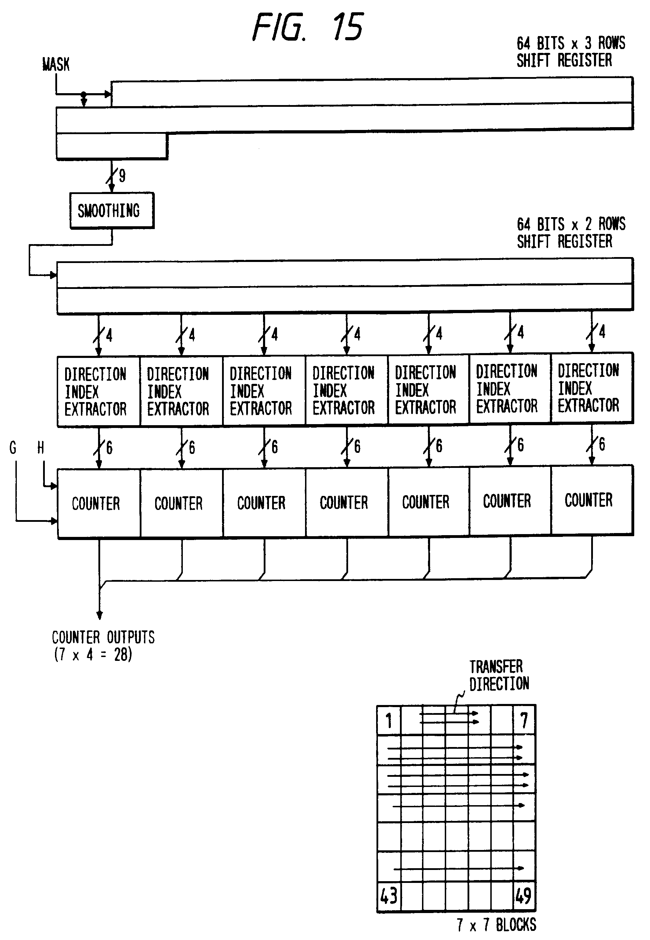

In the 1st embodiment, the processing is conducted in the unit of each of 7 x 7 blocks. In the present embodiment, as shown in Fig. 15, the shift register of 12 bits x 3 rows is replaced by a shift register of 64 bits x 3 rows, the shift register of 12 bits x 2 rows is replaced by a shift register of 64 bits x 2 rows, and there are provided 7 sets of direction index extraction units and counter units, whereby the processing is conducted in the unit of 7 blocks. In contrast to the processing time of the 1st embodiment represented by 12 x 9 x (data transfer time), the present embodiment a shorter processing time of 9 x 9 x (data transfer time).

The normalization size of 62 pixels with a white frame of two pixels therearound gives rise to 66 bits, but there can be adopted 64 bits by omission of two pixels, as two pixels on each end are white pixels.

In this embodiment, the normalization size and the number of block division are fixed.

[Embodiment 7]

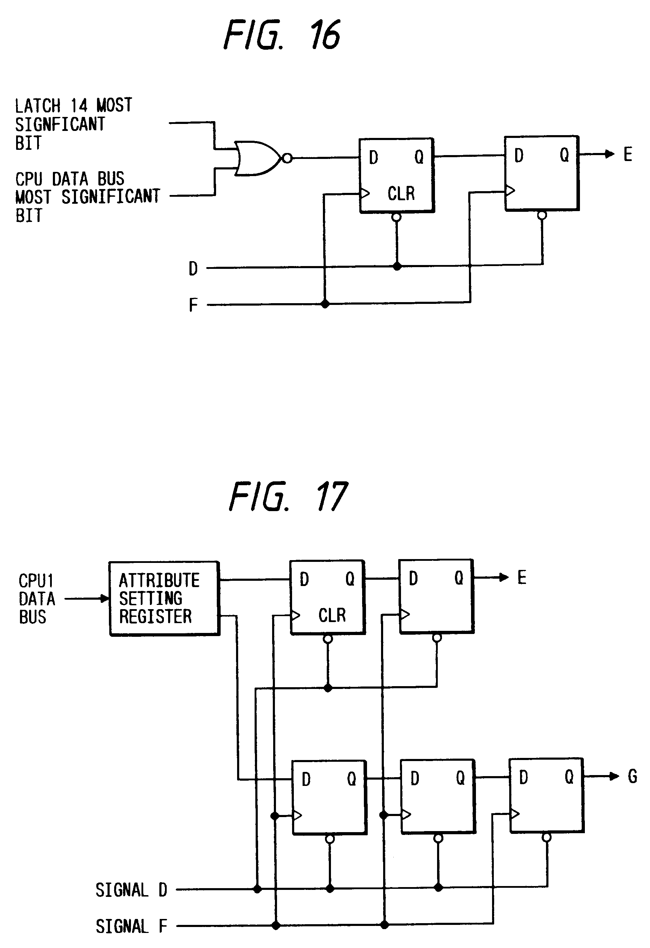

In the lst embodiment, the white frame is processed by the address signal of the CPU 1, but this method requires to vary the processing of the CPU 1 for a block containing the white frame and for a block not containing such white frame. This embodiment employs a size of 66 x 66 pixels, including the white frame added to the normalization size. The X, Y-tables shown in Fig. 6 are prepared in range of X(-1) - X(64) and Y(-1) - Y(64), and white pixel information is set in the data of X(-1), X(0), X(63), Y(-1), Y(0), Y(63) and Y(64). Since the character/communication memory 8 has a fixed maximum capacity, the pixels are regarded as belonging to the white frame when the sum of X and Y exceeds said maximum capacity. For example, since the data bus of the CPU 1 is of 32 bits, a value "0x80000000" with the most significant bit "1" is stored in X(-1), X(0), X(63), X(64), Y(-1), Y(0), Y(63) and Y(64), and the white frame masking signal generator shown in Fig. 5 is modified as shown in Fig. 16. In this manner the white frame process is automatically executed by the data X(-1), ..., X(64), Y(-1), ..., Y(64), so that the CPU 1 can execute same processing for all the blocks.

[Embodiment 8]

In the 1st embodiment, the property or attribute of the pixel is processed by the address signal of the CPU 1. In the present embodiment, an attribute setting register is provided, as shown in Fig. 17, in the control unit 13 shown in Fig. 1B, and the property is recorded in said register whenever it is varied.

[Embodiment 10]

The structure is same as shown in Figs. 1A and 1B, but the image from the scanner 12 is not stored in the RAM 11 but in the character/communication memory 8, and the CPU 9 executes character extraction on the text image stored in said memory 8. If the scanner is of A4 size with a resolving power of 400 dbi, there is required a capacity of about 2 MBytes or $2^{24}$ bits. This capacity can be processed without problem if the latches 14, 15 and the adder 18 in Fig. 1B have a bit width of 24 bits of larger. The CPU 9 is incapable of character extraction during the access of the recognition section to the memory 8, but said access takes place only at the preparation of X, Y-tables in the RAM 3, the direction index extraction in each block, and the output of result of recognition, but not during the preparation of 64-dimensional feature vector from the 196-dimensional direction indexes, the coarse classification and the detailed recognition.

As the lst embodiment also requires image transfer time from the RAM 3 to the memory 8, there is no deterioration in performance if the access period of the recognition section to the memory 8 does not exceed the above-mentioned image transfer time.

**Claims**

1.  An image processing apparatus comprising:

    processing means (1);
    image memory means (8) for storing character image data;
    extraction means (7) for extracting direction information from the character image data stored in the memory means (8); and
matching means for executing a matching process under the control of said processing means (1) between the extracted direction information and reference data stored in a dictionary (4, 6),
the apparatus being characterized in that:
said processing means (1) is arranged to designate an address in the image memory means (8) of a character,
and in that said extraction means (7) is arranged to execute a direction information extracting process, without being controlled by said processing means (1), in response to designation of the address by said processing means (1),
said extraction means (7) comprising:
latching means (14, 15) for holding data from the image memory means at the designated address and producing an output representative of a direction index for the held data;
counter means (27) for counting each direction index output by the latching means (14, 15) to produce said direction information;
and a RAM (3) for storing said direction information,
wherein said matching means is arranged to execute the matching process between the extracted direction information and the reference data stored in the dictionary (4, 6) in response to said direction information produced by the extraction means (7).

2.  An image processing method including the steps of:

    storing character image data in an image memory means (8);
    extracting direction information from the character image data stored in the image memory means (8); and
    executing a matching process under the control of a processing means (1) between the extracted direction information and stored reference data,
    the method being characterized by the steps of:
    using the processing means (1) to designate an address in the image memory means (8) of a character;
    holding data from the image memory means at the designated address in a latching means (14, 15) effective to produce an output representative of a direction index for the held data;
    counting the successive output in direction indices to provide said direction information;
    and storing said direction information,
    the direction information extracting process being executed without being controlled by said processing means (1), in response to said designated address; and

the matching process between the extracted direction information and stored reference data being executed in response to the direction information produced by the extraction means (7).

**Patentansprüche**

1. Bildverarbeitungsgerät, mit:

   einer Verarbeitungseinrichtung (1),

   einer Bildspeichereinrichtung (8) zur Speicherung von Zeichenbilddaten,

   einer Extraktionseinrichtung (7) zur Extraktion von Richtungsinformationen aus den in der Speichereinrichtung (8) gespeicherten Zeichenbilddaten,

   einer Angleichungseinrichtung zur Durchführung eines Angleichungsvorgangs unter der Steuerung durch die Verarbeitungseinrichtung (1) zwischen den extrahierten Richtungsinformationen und in einem Verzeichnis (4, 6) gespeicherten Bezugsdaten, wobei das Gerät dadurch gekennzeichnet ist, daß

   die Verarbeitungseinrichtung (1) angeordnet ist, um eine Adresse eines Zeichens in der Bildspeichereinrichtung (8) zu spezifizieren, und daß

   die Extraktionseinrichtung (7) angeordnet ist, um im Ansprechen auf die Spezifizierung der Adresse durch die Verarbeitungseinrichtung (1) einen Richtungsinformationsextraktionsvorgang durchzuführen, ohne durch die Verarbeitungseinrichtung (1) gesteuert zu werden,

   wobei die Extraktionseinrichtung (7) umfasst:

   eine Zwischenspeichereinrichtung (14, 15) zum Halten von Daten von der Bildspeichereinrichtung an der spezifizierten Adresse und zum Erzeugen einer einen Richtungsindex für die gehaltenen Daten wiedergebenden Ausgabe,

   eine Zählereinrichtung (27) zum Zählen jedes durch die Zwischenspeichereinrichtung (14, 15) ausgegebenen Richtungsindexes, um die Richtungsinformationen zu erzeugen,

   und ein RAM (3) zur Speicherung der Richtungsinformationen, wobei

   die Angleichungseinrichtung angeordnet ist, um den Angleichungsvorgang zwischen den extrahierten Richtungsinformationen und den in dem Verzeichnis (4, 6) gespeicherten Bezugsdaten im Ansprechen auf die durch die Extraktionseinrichtung (7) erzeugten Richtungsinformationen auszuführen.

2. Bildverarbeitungsverfahren mit den Schritten:

Speichern von Zeichenbilddaten in einer Bildspeichereinrichtung (8),

Extrahieren von Richtungsinformationen aus den in der Bildspeichereinrichtung (8) gespeicherten Zeichenbilddaten,

Durchführen eines Angleichungsvorgangs unter der Steuerung durch eine Verarbeitungseinrichtung (1) zwischen den extrahierten Richtungsinformationen und gespeicherten Bezugsdaten,

wobei das Verfahren gekennzeichnet ist durch die Schritte:

Verwenden der Verarbeitungseinrichtung (1), um eine Adresse eines Zeichens in der Bildspeichereinrichtung (8) zu spezifizieren,

Halten von Daten von der Bildspeichereinrichtung an der spezifizierten Adresse in einer Zwischenspeichereinrichtung (14, 15), die zum Erzeugen einer einen Richtungsindex für die gehaltenen Daten wiedergebenden Ausgabe wirksam ist,

Zählen der aufeinanderfolgenden Ausgabe von Richtungsindizes, um die Richtungsinformationen zu bereitzustellen,

Speichern der Richtungsinformationen, wobei der Richtungsinformationsextraktionsvorgang im Ansprechen auf die spezifizierte Adresse durchgeführt wird, ohne durch die Verarbeitungseinrichtung (1) gesteuert zu werden, und der Angleichungsvorgang zwischen den extrahierten Richtungsinformationen und den gespeicherten Bezugsdaten im Ansprechen auf die durch die Extraktionseinrichtung (7) erzeugten Richtungsinformationen ausgeführt wird.

**Revendications**

1. Dispositif de traitement d'image comprenant :

   - un moyen de traitement (1) ;
   - un moyen de mémoire d'image (8) pour stocker des données d'image de caractère ;
   - un moyen d'extraction (7) pour extraire une information de direction à partir des données d'image de caractère stockées dans le moyen de mémoire (8) ; et
   - un moyen d'adaptation pour exécuter un processus d'adaptation sous la commande dudit moyen de traitement (1) entre l'information de direction extraite et des données de référence stockées dans un dictionnaire (4, 6) ;

     dispositif caractérisé en ce que

   - ledit moyen de traitement (1) est prévu pour désigner une adresse dans le moyen de mémoire d'image (8) d'un caractère ;

- et en ce que ledit moyen d'extraction (7) est prévu pour exécuter un procédé d'extraction d'information de direction sans être commandé par ledit moyen de traitement (1) en réponse à la dési-gnation de l'adresse par ledit moyen de traitement (1) ;

ledit moyen d'extraction (7) comprenant :

- des moyens de verrouillage (14, 15) pour maintenir les données à partir du moyen de mémoire d'image à l'adresse désignée et pour produire une sortie représentant un index de direction pour les données concernées ;
- un moyen de compteur (27) pour compter chaque sortie d'index de direction à l'aide des moyens de verrouillage (14, 15) afin de produire ladite information de direction ; et
- une RAM (3) pour stocker ladite information de direction ;
dans lequel ledit moyen d'adaptation est prévu pour exécuter le processus d'adaptation entre l'information de direction extraite et les données de référence stockées dans le dictionnaire (4, 6) en réponse à ladite information de direction produite par le moyen d'extraction (7).

2. Procédé de traitement d'image comprenant les étapes suivantes de :

- stockage de données d'image de caractère dans un moyen de mémoire d'image (8) ;
- extraction d'une information de direction à partir des données d'image de caractère stockées dans le moyen de mémoire d'image (8) ; et
- exécution d'un processus d'adaptation sous la commande d'un moyen de traitement (1) entre l'information de direction extraite et les données de référence stockées ;

procédé caractérisé par les étapes suivantes de :

- utilisation du moyen de traitement (1) pour désigner une adresse dans le moyen de mémoire d'image (8) d'un caractère ;
- conservation des données à partir du moyen de mémoire d'image à l'adresse designée dans un moyen de verrouillage (14, 15) prévu pour produire une sortie représentant un index de direction pour les données conservées ;
- comptage de la sortie successive dans les index de direction pour fournir ladite information de direction ; et
- stockage de ladite information de direction ;

le processus d'extraction d'information de direction étant exécuté sans être commandé par ledit moyen de traitement (1) en réponse à ladite adresse désignée ; et

le processus d'adaptation entre l'information de direction extraite et les données de référence stockées étant exécuté en réponse à l'information de direction produite par le moyen d'extraction (7).

# FIG. 1A

IMAGE INPUT &
CHR EXTRACTING
SECTION

RECOGNIZING SECTION

FIG. 1B

## FIG. 2A

```
CHR IMAGE AREA

CHR
POSITION
AREA

RECOGNITION
RESULT AREA
```

LESS
SIGNIFICANT

MOST
SIGNIFICANT

## FIG. 2B

W

(0, 0) ⟶ x

(a1, b1)   (a2, b2)   (a3, b3)

y

H

(c1, d1)   (c2, d2)   (c3, d3)

## FIG. 2D

| 1ST CANDIDATE CODE | |
|---|---|
| | DISTANCE |
| 2ND CANDIDATE CODE | |
| | DISTANCE |
| | |
| ⋮ | |
| 8TH CANDIDATE CODE | |
| | DISTANCE |

## FIG. 2C

| | |
|---|---|
| W | ... NO. OF BYTES IN HORIZONTAL DIRECTION |
| H | ... NO. OF BYTES IN VERTICAL DIRECTION |
| a1 | ... x COORDINATE OF THE SMALLEST RECTANGLE ENCLOSING CHR |
| b1 | ... y COORDINATE OF THE SMALLEST RECTANGLE ENCLOSING CHR |
| c1 | ... x COORDINATE OF THE SMALLEST RECTANGLE ENCLOSING CHR |
| d1 | ... y COORDINATE OF THE SMALLEST RECTANGLE ENCLOSING CHR |

# FIG. 3

| WRITE | READ | ADDRESS OFFSET (IN BYTES) |
|---|---|---|
| | COUNTER 27-1 | + 0 |
| LATCH 15 | 27-2 | + 4 |
| | 27-3 | + 8 |
| | 27-4 | + 12 |
| LATCH 14 | | + 16 |
| CONTROL SIGNAL B | CONTROL SIGNAL D, H | + 20 |

|←——— 32 BITS ———→|←——— 32 BITS ———→|

LESS
SIGNIFICANT

| |
|---|
| ROM 2 |
| RAM 3 |
| |
| I/O AREA |
| |
| CHR COMMUNICATION MEM 8 |

DIRECTION INDEX EXTRACTOR

DICTIONARY MEM

COARSE CLASSIFIER

- - - - ADDRESS = XXXX

MOST
SIGNIFICANT

*FIG. 4A*

FIG. 1B-22

12 BITS
x 3 ROWS

9 BITS

FIG. 1B-24

12 BITS
x 2 ROWS

4 BITS

*FIG. 4B*

12 PIXELS

4 x 4
MASK

| 1 | 13 | 25 | 37 | | | | 121 | 133 |
| | | 26 | | | | | | |
| | | 27 | | | | | | |

12 PIXELS

4 x 4
MASK

| 12 | 24 | 36 | 48 | | | | 120 | 132 | 144 |

## FIG. 5

CPU-A0 ——[ D  Q ]——[ D  Q ]——→ E
         CLR        CLR

CPU-A1 ——[ D  Q ]——[ D  Q ]——[ D  Q ]——→ G
         CLR        CLR        CLR

FIG. 1B
SIGNAL D ——

SIGNAL F ——

## FIG. 7A

| 1 | 2 | 3 | 4 | 5 | 6 | 7 |
|---|---|---|---|---|---|---|
|   |   |   |   |   |   | 14 |
|   |   |   |   |   |   | 21 |
|   |   |   |   |   |   | 28 |
|   |   |   |   |   |   | 35 |
|   |   |   |   |   |   | 42 |
|   |   |   |   |   |   | 49 |

## FIG. 7B

| 1 |   |   |   |   |   |   |
|---|---|---|---|---|---|---|
| 2 |   |   |   |   |   |   |
| 3 |   |   |   |   |   |   |
| 4 |   |   |   |   |   |   |
| 5 |   |   |   |   |   |   |
| 6 |   |   |   |   |   |   |
| 7 | 14 | 21 | 28 | 35 | 42 | 49 |

# FIG. 6

CHR COMMUNICATION MEM 8

w = c - a
h = d - b

RAM3

X-TABLE → $X(x) = \dfrac{w \cdot x}{62} + a$      $(x = 1 \sim 62)$

Y-TABLE → $Y(y) = (\dfrac{h \cdot y}{62} + b) \cdot w \cdot 8$    $(y = 1 \sim 62)$

DIRECTION INDEX AREA

(1, 1)

(62, 62)

$B(x, y) = X(x) + Y(y)$

B = BIT POSITION IN MEM 8

B (x, y)

MOST SIGNIFICANT BITS :
ADDRESS OF MEM 8

LESS SIGNIFICANT 4 BITS :
POSITION OF 1 BIT IN 1 WORD ;
1 WORD = 16 = $2^4$ BITS

# FIG. 8   PRIOR ART

CPU — 9

ROM — 10

RAM — 11

SCANNER — 12

CHARACTER COMMUNICATION MEM — 8

CPU — 1

ROM — 2

RAM — 3

DICTIONARY MEM — 4

COARSE CLASSIFIER — 5

COARSE CLASSIFICATION DICTIONARY MEM — 6

**FIG. 9A**

MEM 8

NORMALIZE →

(1, 1) 62

62

(62, 62)

**FIG. 9B**

| P1 | P2 | P3 |
|----|----|----|
| P4 | P0 | P5 |
| P6 | P7 | P8 |

$A = \sum_{i=0}^{8} Pi \quad (Pi = 0 \text{ OR } 1)$

$P0 = 0 \quad (A < 5)$

$P0 = 1 \quad (A \geqq 5)$

**FIG. 9C**

DIRECTION 1 ⊞ + 1    ⊞ + 1    → ←

DIRECTION 2 ⊞ + 1    ⊞ + 1    ⊞ + 2    ↗ ↙

DIRECTION 3 ⊞ + 1    ⊞ + 1    ↑ ↓

DIRECTION 4 ⊞ + 1    ⊞ + 1    ⊞ + 2    ↖ ↘

## FIG. 10

7 x 7 x 4 = 196

FILTER COEFFICIENTS

GRADATION

4 x 4 x 4 = 64

# FIG. 11

O FUNCTION FOR COARSE CLASSIFICATION (1)

$$\sum_{i=1}^{64} W_i \cdot X_i + W_0$$

$W_0 \sim W_{64}$ COARSE CLASSIFICATION  $X_i \cdots$ FEATURE VECTOR

O FUNCTION FOR FINE CLASSIFICATION (2)

$$\left[ \sum_{i=1}^{69} (x_i - \mu_i)^2 - \sum_{j=1}^{7} K_j \cdot \left\{ \sum_{i=1}^{64} V_{ij} (x_i - \mu_i) \right\}^2 \right] \cdot B + A$$

$X \cdots$ FEATURE VECTOR

$$i = 1 \sim 64$$
$$j = 1 \sim 7$$

$\mu_i,\ K_j,\ V_{ij},\ B,\ A$    DATA IN FINE CLASSIFICATION DICTIONARY

# FIG. 12

FIG. 1B-22

12 BITS
x 4 ROWS

16

SMOOTHING
DIRECTION
INDEX
EXTRACTOR

6

FIG. 1B-27

# FIG. 13

BLOCK SIZE
SETTING
REGISTER

WHITE FRAME MASK

8→1 MUX

SELECT

3

8→1 MUX

(9~16) x 3 ROWS
SHIFT REGISTER

9

SMOOTHING

SMOOTHING

8→1 MUX

(9~16) x 2 ROWS
SHIFT REGISTER

4

DIRECTION
INDEX
EXTRACTOR

# FIG. 14

2 x 2 MASK OUTPUT

| P0 | P2 |
|----|----|
| P1 | P3 |

P0 P1 P2 P3

DIRECTION INDEX 1
COUNT ENABLE

DIRECTION INDEX 2
COUNT ENABLE

DIRECTION INDEX 2
SELECTION SIGNAL +1, +2

DIRECTION INDEX 3
COUNT ENABLE

DIRECTION INDEX 4
COUNT ENABLE

DIRECTION INDEX 4
SELECTION SIGNAL +1, +2

DIRECTION INDEX 5
COUNT ENABLE

⌐ ¬ : EMBODIMENT 5

# FIG. 15

MASK

64 BITS x 3 ROWS
SHIFT REGISTER

/9

SMOOTHING

64 BITS x 2 ROWS
SHIFT REGISTER

/4      /4      /4      /4      /4      /4      /4

| DIRECTION INDEX EXTRACTOR | DIRECTION INDEX EXTRACTOR | DIRECTION INDEX EXTRACTOR | DIRECTION INDEX EXTRACTOR | DIRECTION INDEX EXTRACTOR | DIRECTION INDEX EXTRACTOR | DIRECTION INDEX EXTRACTOR |

G   H

/6      /6      /6      /6      /6      /6      /6

| COUNTER | COUNTER | COUNTER | COUNTER | COUNTER | COUNTER | COUNTER |

COUNTER OUTPUTS
(7 x 4 = 28)

TRANSFER
DIRECTION

1               7

43              49

7 x 7 BLOCKS

# FIG. 16

# FIG. 17

## FIG. 18

LATCH 14    X (a)

FIG. 1B SIGNAL F

CPU DATA BUS    Y (b)    Y (b+1)    Y (b+2)    Y (b+3)    Y (b+4)

ADDER 18    (a, b)    (a, b+1)    (a, b+2)    (a, b+3)

LATCH 15    ?    ADDRESS (a, b)    ADDRESS (a, b+1)    (a, b+2)

MEM 8 READ SIGNAL

MEM DATA BUS    (a, b)    (a, b+1)

LATCH 16    DATA (a, b)    DATA (a, b+1)    DATA (a, b+2)

SMOOTHING RESULT

BIT SELECTION ;
3 x 3 SMOOTHING ;
WHITE FRAME MASK    (a-b)    (a-1, b)    (a-1, b+1)

WHITE FRAME ATTRIBUTE (SIGNAL)    (a, b)    (a, b+1)    (a, b+2)

2 X 2 SHIFT REGISTER OUTPUT    2 x 2 MASK FOR (a, b)

DECODER ATTRIBUTE (SIGNAL G)    DIRECTION INDEX

COUNTER

COUNT ATTRIBUTE (a, b)    (a, b+1)

COUNT FOR (a, b)

EP 0 471 473 B1

# FIG. 19

(a-3, b-3)

2 x 2 MASK

(a, b)